## Europäisches Patentamt
## European Patent Office
## Office européen des brevets

(19)

(11) Numéro de publication: **0 124 485**
**A2**

# (12) DEMANDE DE BREVET EUROPEEN

(21) Numéro de dépôt: **84810200.0**

(51) Int. Cl.³: **G 02 B 7/26**

(22) Date de dépôt: **27.04.84**

(30) Priorité: **29.04.83 FR 8307103**

(43) Date de publication de la demande: **07.11.84**
**Bulletin 84/45**

(84) Etats contractants désignés: **AT BE CH DE FR GB IT LI LU NL SE**

(71) Demandeur: **FONDATION SUISSE POUR LA RECHERCHE EN MICROTECHNIQUE, Rue Jaquet-Droz 7, CH-2000 Neuchâtel 7 (CH)**
Demandeur: **CABLOPTIC S.A., Rue François-Borel, CH-2016 Cortaillod (CH)**

(72) Inventeur: **Jaccard, Pierre Ernest, rue du Soleil 7, CH-2605 Sonceboz (CH)**
Inventeur: **Parriaux, Olivier Maurice, Dr., Chemin des Trois Rois 9, CH-1005 Lausanne (CH)**

(74) Mandataire: **Brulliard, Joel, c/o Centre Electronique Horloger S.A. Maladière 71, CH-2000 Neuchâtel 7 (CH)**

(54) **Procédé pour abraser longitudinalement des fibres optiques et produits obtenus par ce procédé.**

(57) L'invention concerne l'usinage mécanique de fibres optiques. Le procédé de l'invention repose sur l'application des méthodes d'attaque photolithographique du silicium monocristallin en vue d'obtenir un support usiné de très grande précision. Dans ce but, un masque (2) comporte une pluralité de canaux (1) dont les bords (10) sont de forme concave et dont la largeur au centre est bien déterminée. Une attaque anisotrope d'un substrat, au moyen de ce masque, produit des sillons de profondeur variable et bien contrôlée permettant d'y loger des fibres optiques ne dépassant du substrat que dans la région du centre du sillon. Un polissage de l'ensemble permet d'abraser une pluralité de fibres avec une très grande précision.

L'invention s'applique dans le domaine des télécommunications par fibres optiques.

## PROCEDE POUR ABRASER LONGITUDINALEMENT DES FIBRES OPTIQUES
## ET PRODUITS OBTENUS PAR CE PROCEDE

La présente invention concerne, de manière générale, le couplage à partir d'une fibre optique et se rapporte plus particulièrement à un procédé pour abraser de manière précise le manteau des fibres optiques et aux produits résultant de la mise en oeuvre de ce procédé.

Bien que le développement des fibres optiques monomodes ait connu, ces dernières années, un essor important, certaines applications commerciales ont été freinées, entre autres raisons, par les problèmes que soulèvent la connexion fibre à fibre ou le couplage entre fibres ou, plus généralement, entre une fibre et un guide d'onde optique. Bien des techniques ont été proposées qui sont restées, le plus souvent, au stade du laboratoire parce que nécessitant un appareillage de haute précision et un personnel hautement qualifié. La connexion fibre à fibre, bien que dépendante de conditions d'alignement et d'adaptation géométrique très strictes, peut certainement être réalisée de manière satisfaisante. Elle ne constitue pas cependant une solution valable dans tous les cas, car elle ne permet pas un couplage sélectif en termes de puissance, de polarisation, de mode et de longueur d'onde. Réaliser un couplage sélectif entre une fibre optique et un autre guide d'onde suppose que l'on puisse accéder, de manière contrôlée, à la proximité immédiate du coeur de la fibre dont le diamètre est de quelques microns seulement et qui est protégé par un manteau (ou "cladding" selon la terminologie anglo-saxonne) de quelque cent microns de diamètre. Plusieurs techniques ont été étudiées parmi lesquelles on peut citer: l'usinage chimique pour éliminer partiellement le manteau de la fibre, la diffusion d'ions dans le manteau pour modifier localement le profil d'indice entre le coeur et le manteau, ou la fusion de deux ou plusieurs fibres ensemble. Ces différentes techniques, soit sont difficiles ou coûteuses à mettre en application, soit ne permettent pas d'obtenir avec précision un rapport de couplage donné.

On connaît aussi plusieurs procédés d'usinage mécanique d'une fibre en vue de permettre la réalisation de coupleurs optiques.

On peut citer, à titre d'exemple, les articles suivants:

1) "Fabrication of low-loss 3 dB couplers with multimode optical fibers" par Y. Tsujimato et al, paru dans Electronics Letters, 2nd March 1978, Vol. 14, No 5;

2) "Single-mode fiber optic directional coupler", par R.A. Bergh et al, paru dans Electronics Letters, 27th March 1980, Vol. 16, No 7;

3) "Distributed coupling on polished single-mode optical fibers", par O. Parriaux et al, paru dans Applied Optics, Vol. 20, No 14, 15th July 1981;

4) "Single-mode-fiber 1 x N directional coupler", par S.A. Newton et al, paru dans Optics Letters, Vol. 8, No 1, January 1983.

Le procédé décrit dans l'article 1) consiste à noyer une fibre, préalablement courbée, dans un substrat plastique qui est ensuite poli jusqu'à ce que le coeur de la fibre soit entamé. En accolant deux substrats ainsi préparés, on obtient un coupleur à quatre portes. Le procédé décrit suppose un contrôle permanent des résultats du polissage et ne permet pas la fabrication en série.

L'article 2) prévoit d'utiliser deux blocs de quartz dont les faces supérieure et inférieure sont parallèles et de réaliser sur l'une des faces de chaque bloc un sillon de largeur constante, le fond dudit sillon étant rendu courbe au moyen d'une scie à fil. Une fibre est alors fixée dans chacun des sillons et les faces correspondantes des deux blocs sont ensuite polies jusqu'à ce que le manteau des fibres soit attàqué sur une épaisseur voulue. Ce procédé ne permet pas plus que le précédent la réalisation en série.

Une autre méthode pour éroder le manteau d'une fibre optique monomode en contrôlant l'épaisseur de l'attaque est décrite dans l'article 3). Selon cette méthode, la fibre optique est collée sur une lentille plan-convexe et un polissage de la fibre à l'aide d'une pâte abrasive est effectué selon un plan tangent à la fibre. La fibre est excitée pendant toute la durée du polissage afin de permettre le contrôle de la profondeur de pénétration dans la fibre.

Dans les trois procédés précédemment décrits, il est nécessaire d'avoir un contrôle continu pour obtenir la précision d'usinage requise, et cela constitue une gêne sinon un empêchement à leur application de manière industrielle.

Le procédé décrit dans l'article 4) prévoit l'usinage simultané de plusieurs fibres. Il consiste dans l'utilisation d'un substrat de silicium dans lequel une pluralité de gorges parallèles en forme de V et de largeur constante a été réalisée au moyen d'un procédé d'attaque anisotrope du silicium. Le substrat est ensuite collé sur une surface courbe d'un bloc de quartz. Sur les quatre coins du bloc de quartz sont alors montés quatre pieds, également en quartz, dont les extrémités définissent un plan d'usinage. L'ensemble des quatre pieds est ensuite poli jusqu'à ce que toutes les fibres soient attaquées jusqu'à la profondeur voulue. Bien qu'abordant le problème de la production simultanée d'une pluralité de sections de fibres polies, cette approche se prête mal à une industrialisation. En effet, le bloc de base en quartz est complexe, coûteux, volumineux et doit rester solidaire du substrat de silicium. De plus, la forme arrondie du support de quartz ne permet pas de définir une cote d'arrêt du polissage des fibres et, dès lors, nécessite un contrôle optique continu sur plusieurs d'entre elles.

Par ailleurs, le procédé décrit ne permet pas une séparation aisée des coupleurs ainsi fabriqués et ne donne pas de solution au problème de la manipulation des fibres dans les conditions réelles d'utilisation; c'est-à-dire des fibres munies de leur gaine.

Aussi un objet de la présente invention est un procédé pour abraser des fibres optiques par polissage ne comportant pas les inconvénients mentionnés ci-dessus.

Un autre objet de l'invention est un procédé pour éroder simultanément une pluralité de fibres optiques démunies de leur gaine, susceptible d'application industrielle.

Un autre objet de l'invention est le produit résultant de la mise en oeuvre du procédé.

Selon l'invention, le procédé pour abraser longitudinalement des fibres optiques comporte les opérations suivantes:

- réalisation d'un masque d'attaque photolithographique comportant une pluralité de canaux parallèles, dont les bords sont de forme concave et dont la largeur au centre a une valeur bien déterminée;

- attaque anisotrope, au moyen dudit masque, d'un substrat de silicium monocristallin plan dont les faces supérieure et inférieure ont été préalablement rectifiées et au moins l'une d'entre elles polie, ladite attaque anisotrope donnant des sillons à profondeur variable dans ledit substrat à partir de ladite face polie;

- dénudage des fibres sur une longueur correspondant à celle desdits sillons dans le substrat et fixation des parties dénudées dans lesdits sillons;

- polissage des fibres pour éliminer les parties de celles-ci qui dépassent ladite face polie dudit substrat.

D'autres objets, caractéristiques et avantages de la présente invention apparaîtront plus clairement à la lecture de la description suivante faite à titre d'exemple non limitatif et en relation avec les dessins joints dans lesquels:

la figure 1 montre un exemple de réalisation du masque photolithographique pour l'obtention de sillons de profondeur variable;

la figure 2 montre le détail de la partie centrale du dessin d'un sillon;

la figure 3 montre, en coupe, un substrat comportant des sillons à profondeur variable et des prédécoupes;

la figure 4 montre, en coupe, une fibre positionnée dans un sillon du substrat;

la figure 5 montre une fibre dénudée prête à être posée dans un sillon du substrat;

la figure 6 montre, en coupe, le substrat et la fibre dénudée avant l'opération de polissage;   et

la figure 7 est un schéma explicatif de l'opération de polissage.

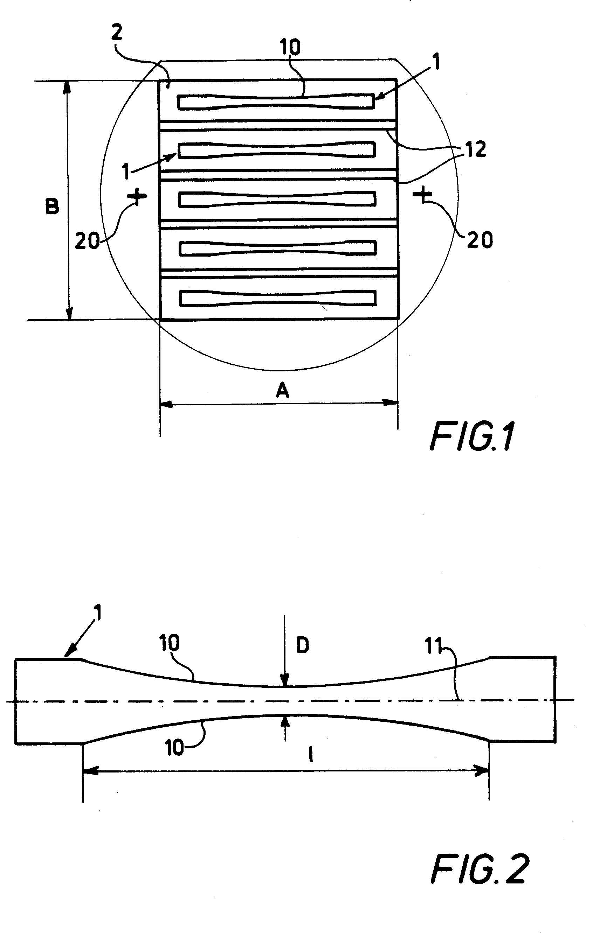

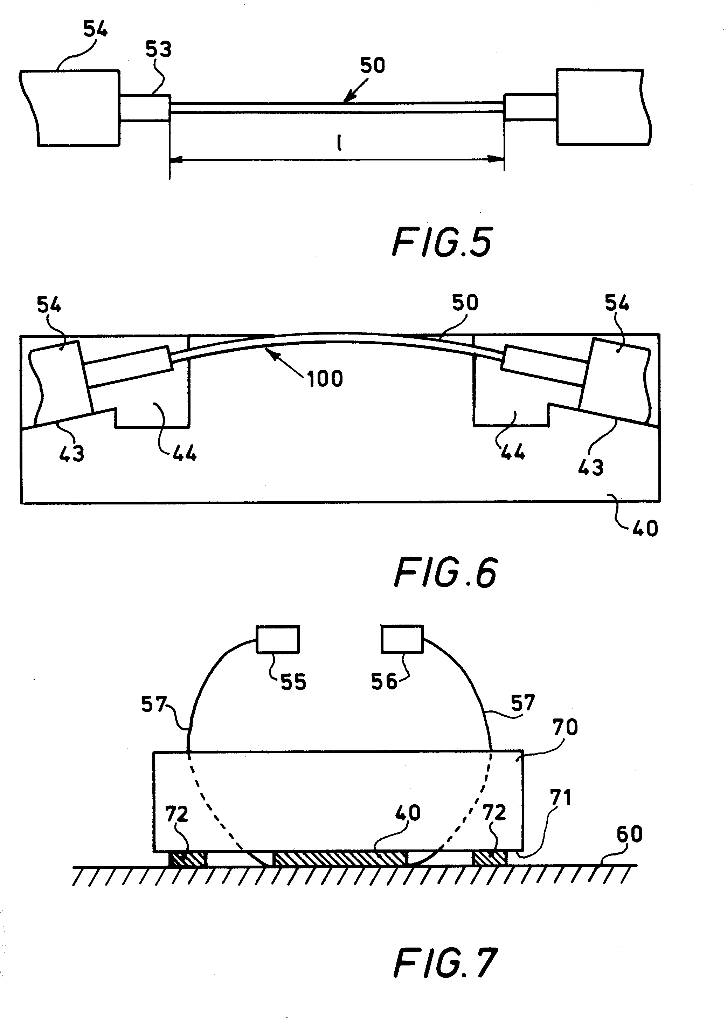

Le procédé de l'invention repose essentiellement sur la réalisation de sillons, de profondeur variable, dans un substrat avec une précision suffisante. Pour cela, le support choisi est un support en silicium monocristallin dont les techniques d'attaque chimique anisotrope se prêtent bien à la réalisation de structures géométriques de grande précision. La profondeur variable des sillons dans le support sera obtenue à partir d'un masque photolithographique reproduisant des canaux de largeur variable. Un tel masque est montré à la figure 1 où l'on voit une pluralité de canaux 1. Ces canaux présentent, sur une partie au moins de leur longueur, des bords 10 de forme concave. C'est précisément cette forme concave qui permettra, lors de l'attaque chimique, l'obtention d'un sillon de profondeur variable en se basant sur l'angle constant, selon une direction donnée, de l'attaque chimique. La figure 2 permet de définir les paramètres des canaux 1. Les paramètres importants sont la distance minimale D entre les bords 10 du canal, la forme de la courbure des bords 10 et la longueur $\ell$. La distance D définit la profondeur d'attaque de la fibre et la concavité des bords 10 définit la surface de la zone sur laquelle la fibre est attaquée. On conçoit que ces deux paramètres sont très importants, car ils définissent directement les caractéristiques de couplage à partir de la fibre optique usinée. La figure 1 montre encore des canaux rectilignes 12 qui peuvent être prévus entre les canaux 1 pour servir, comme on le verra plus loin, à réaliser des entailles dans le substrat de manière à en faciliter la découpe ultérieure. On a également représenté sur la figure 1 des repères ou marques d'alignement 20 destinés à faciliter l'alignement précis du masque par rapport aux directions du cristal constituant le substrat. Le masque de la figure 1 est ensuite utilisé pour délimiter l'attaque chimique d'un substrat de silicium monocristallin. L'article de Kenneth E. Bean, intitulé "Anisotropic etching of silicon" et paru dans IEEE Trans. on Electron Devices, Vol. ED-25, No 10, October 1978, montre qu'il est possible d'attaquer un substrat de silicium selon une direction donnée en choisissant convenablement l'orientation du substrat et le positionnement du masque. En particulier, la figure 5 de l'article précité montre qu'une attaque perpendiculairement au plan d'une plaquette de silicium monocristallin, selon une direction $<100>$ , est limitée par les plans d'orientation $<111>$ qui forment avec le plan de la plaquette des angles de 54,74°. Il est clair, dans ce cas, que la profondeur de l'attaque dépend directement de la largeur de l'ouverture à travers laquelle cette attaque est faite. Le masque de la figure 1 sera positionné sur le substrat de manière que l'axe longitudinal 11 des canaux 1 soit parallèle ou perpendiculaire à la direction $<110>$ du cristal. La géométrie des sillons destinés à recevoir les fibres devant présenter une précision supérieure ou égale au micromètre, la précision d'orientation du masque par rapport aux directions cristallines $<110>$ du substrat de silicium doit être de l'ordre de 0,1°. Un alignement aux rayons X permet facilement cette précision. Des traces d'alignement seront alors disposées sur chaque plaquette ou substrat de silicium. Ces traces, ainsi que les marques 20 prévues sur le masque, permettront un positionnement du masque avec la précision recherchée.

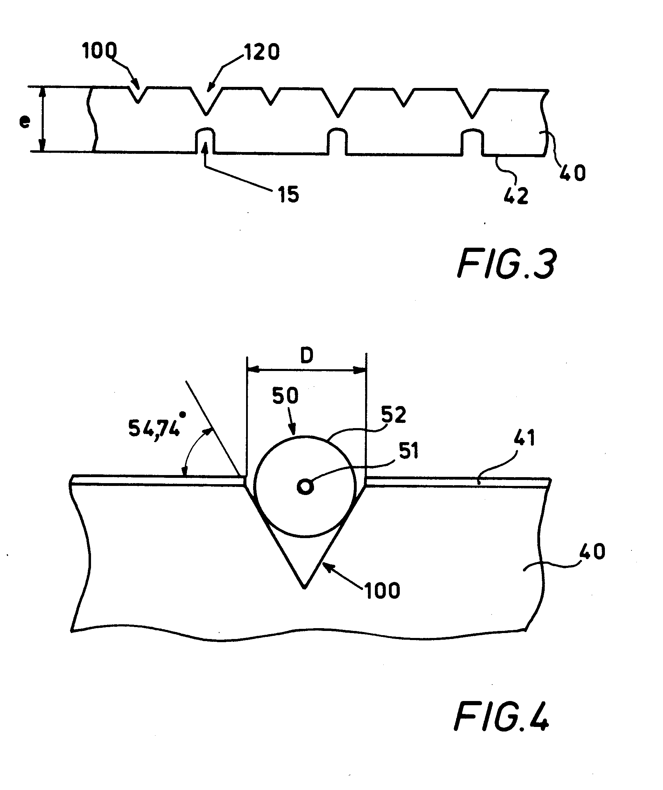

La fabrication des circuits électroniques intégrés sur des plaquettes de silicium requiert des substrats plans dont une des faces a été polie. Bien que de telles plaquettes satisfassent aux exigences de la présente invention, on utilisera cependant de préférence une plaquette 40 dont l'épaisseur e (figure 3) est sensiblement plus grande (typiquement 2,5 mm) que celle des plaquettes couramment utilisées. Cette épaisseur supérieure permet d'obtenir une rigidité mécanique adéquate et de fixer la gaine des fibres, comme il sera vu plus loin. Au besoin, la face non polie 42 de la plaquette sera rectifiée de façon que, l'une des faces reposant sur un plan, l'autre soit également plane. Le parallélisme des deux faces n'est pas nécessaire. La plaquette 40 est ensuite traitée de manière classique pour obtenir les sillons 100 et 120: il y a, en premier lieu, oxydation de la surface de la plaquette (c'est-à-dire formation d'une couche 41 de $SiO_2$), puis dépôt d'une couche photosensible, exposition de cette couche à travers le masque de la figure 1, développement et attaque de la couche d'oxyde, puis du silicium à travers les fenêtres ainsi ouvertes. La plaquette 40 étant relativement épaisse, il est nécessaire de prévoir, sur ses deux faces, des entailles 120 et 15 qui faciliteront la découpe ultérieure. Les entailles 120 sont réalisées en même temps et par les mêmes moyens que les sillons 100; les entailles 15, prévues sur le dos 42 de la plaquette 40, peuvent être faites, par exemple, à l'aide d'une scie à fil. Il convient cependant de noter que ces entailles 120 et 15 ne sont pas indispensables et peuvent être omises notamment lorsqu'on désire réaliser un dispositif comportant une pluralité de fibres. Une fois réalisés les sillons 100 et les entailles de prédécoupe 120 et 15, la plaquette 40 est découpée par sciage pour obtenir un support rectangulaire de dimensions A X B (figure 1).

La figure 4 montre le positionnement d'une fibre 50 dans un sillon 100 au centre de celui-ci ou, en d'autres termes, dans la zone du sillon 100 de largeur minimale D. Lors de l'opération de polissage, seules les fibres seront attaquées et le polissage s'arrêtera au niveau du plan supérieur de la plaquette 40. La largeur minimale D du sillon sera donc déterminée en fonction de la profondeur voulue d'attaque de la fibre, c'est-à-dire en fonction du coefficient de couplage désiré. Seul le manteau 52 de la fibre sera attaqué, l'attaque s'arrêtant au niveau du plan supérieur de la couche d'oxyde 41 de la plaquette 40, à quelques microns seulement du coeur 51 de la fibre 50.

La figure 5 montre une fibre dénudée prête à être montée dans un sillon 100 et la figure 6 montre la fibre ainsi préparée montée sur le substrat 40. La fibre 50 n'est dénudée que sur une partie de longueur $\ell$ correspondant à la longueur du sillon 100. En dehors de cette partie, la fibre est classiquement revêtue d'un enrobage 53 (ou "microjacket" selon la terminologie anglo-saxonne) et d'une gaine 54 (ou "coating" selon la terminologie anglo-saxonne). La figure 6 montre comment est utilisée la gaine 54 de la fibre pour son maintien sur le substrat 40. Après réalisation des sillons 100, comme décrit ci-dessus, des rainures 43, destinées à recevoir la fibre gainée 54, sont réalisées de part et d'autre des sillons et dans leur prolongement. Un dégagement 44 est également prévu pour séparer les rainures 43 du sillon 100. Les rainures 43 et les dégagements 44 ne requièrent pas la même précision que les sillons 100 et peuvent, par exemple, être réalisés par meulage ou par tout autre moyen adéquat. On associe ainsi sur un même substrat des techniques d'usinage mécanique classique et de micro-usinage chimique. Les fibres sont ensuite appliquées sur le substrat 40 de manière que leur partie dénudée 50 soit engagée dans les sillons 100 et que les parties gainées 54 soient engagées dans les rainures 43. La fixation des fibres sur le substrat est assurée par collage ou par tout autre moyen convenable.

La figure 7 est un schéma explicatif de l'opération de polissage. Le substrat 40 est appliqué contre la face plane rectifiée 71 d'un support de polissage 70. Ce support de polissage 70 doit permettre le dégagement et/ou le logement des extrémités 57 des fibres dont la partie centrale 50 doit être polie. L'ensemble substrat 40 et support 70 est disposé sur une surface de polissage 60 également rectifiée. Des cales de maintien 72 réalisées par exemple dans les chutes de la plaquette 40, peuvent être prévues entre le support 70 et la surface de polissage 60. Le polissage, à l'aide d'un produit abrasif adéquat, attaque la partie des fibres qui dépasse des sillons 100 du substrat 40 et il est limité au plan poli du substrat de silicium 40. Ce dernier constitue en effet un plan d'arrêt car il y a une grande discontinuité entre la vitesse d'attaque des fibres optiques et celle du substrat. C'est précisément cette discontinuité qui est mise à profit pour l'obtention d'une cote précise et identique pour toutes les fibres fixées sur le substrat 40. Pour augmenter cette discontinuité et donc améliorer encore la précision du procédé de l'invention, le substrat de silicium peut être revêtu d'une couche dure de quelques microns et résistant à l'abrasion (telle une couche de nitrure de silicium $Si_3N_4$), avant la mise en place des fibres.

Bien qu'une grande précision soit inhérente au procédé décrit, il est toutefois possible de contrôler le déroulement de l'opération en excitant une ou plusieurs fibres à l'aide d'un émetteur 55 et en mesurant l'énergie transmise à la sortie de la fibre à l'aide d'un récepteur 56.

Le procédé de l'invention permet donc de reporter la précision inhérente à la photolithographie à haute résolution sur la cote d'attaque de l'ensemble des fibres avec, pour seule exigence mécanique, l'existence d'une bonne surface plane rectifiée. Il permet ainsi une fabrication de type industriel au moyen de technologies bien maîtrisées et économiques sans recourir à l'utilisation de machines de production précises, complexes et coûteuses.

Après l'opération de polissage, le substrat 40 est découpé en utilisant les entailles de prédécoupe et il reste partie intégrante des dispositifs obtenus qui peuvent être utilisés comme composants de sortie ou d'accès de l'énergie lumineuse dans un système de télécommunication optique ou de capteur physique ou chimique à fibre optique.

Le procédé décrit ci-dessus est basé sur l'utilisation d'un substrat de silicium monocristallin dans lequel des structures géométriques de très grande précision peuvent être réalisées grâce aux procédés photolithographiques appliqués dans les technologies des circuits électroniques intégrés. Cependant, une variante de ce procédé, qui serait particulièrement avantageuse dans le cadre d'une production en grande série, consiste à utiliser le substrat de silicium en tant qu'original pour l'obtention de répliques qui serviront de moules pour la fabrication de copies en un matériau meilleur marché que le silicium, tel un matériau plastique. Les techniques actuelles laissent envisager la possibilité d'obtenir, par moulage, de telles copies tout en conservant la précision de l'original de base en silicium. Ces copies peuvent alors être utilisées dans le procédé de l'invention en lieu et place du substrat de silicium monocristallin.

Bien que la présente invention ait été décrite dans le cadre d'un exemple de réalisation donné, il est clair cependant qu'elle n'est pas limitée audit exemple et qu'elle est susceptible de modifications ou variantes sans sortir de son domaine. Elle s'applique en particulier aux fibres multimodes.

00124485

REVENDICATIONS

1. Procédé pour abraser longitudinalement des fibres optiques, caractérisé en ce qu'il comporte les opérations suivantes:

- réalisation d'un masque d'attaque photolithographique comportant une pluralité de canaux parallèles (1), dont les bords sont de forme concave et dont la largeur au centre a une valeur bien déterminée;

- attaque anisotrope, au moyen dudit masque, d'un substrat de silicium monocristallin (40) plan dont les faces supérieure et inférieure ont été préalablement rectifiées et au moins l'une d'entre elles polie, ladite attaque anisotrope donnant des sillons (100) à profondeur variable dans ledit substrat à partir de ladite face polie;

- dénudage des fibres sur une longueur correspondant à celle desdits sillons dans le substrat et fixation des parties dénudées (50) dans lesdits sillons;

- polissage des fibres pour éliminer les parties de celles-ci qui dépassent ladite face polie dudit substrat.

2. Procédé selon la revendication 1, caractérisé en ce que les axes cristallographiques du substrat d'orientation <100> sont déterminés avec précision et en ce que ledit masque d'attaque est positionné de manière que les axes longitudinaux desdits canaux parallèles soient parallèles ou perpendiculaires aux directions < 110> dudit substrat.

3. Procédé selon la revendication 1 ou la revendication 2, caractérisé en ce que ledit masque d'attaque comporte en outre des canaux aux bords rectilignes (12) qui séparent, les uns des autres, lesdits canaux aux bords de forme concave (1) et servent à réaliser des premières rainures de prédécoupe dans le substrat.

4. Procédé selon la revendication 3, caractérisé en ce que des secondes rainures de prédécoupe sont réalisées sur le dos dudit substrat et en regard desdites premières rainures et en ce que ledit substrat est découpé selon ces dites rainures après l'opération de polissage.

5. Procédé selon l'une des revendications 1 à 4, caractérisé en ce qu'il comporte également une opération d'attaque du substrat pour réaliser des encoches (43) destinées à l'appui et la fixation sur le substrat des extrémités non dénudées (54) desdites fibres, l'axe desdites encoches étant dans le prolongement de celui des extrémités desdits sillons (100).

6. Procédé selon l'une quelconque des revendications 1 à 5, caractérisé en ce qu'il comporte également, après l'attaque anisotrope du substrat, le dépôt sur ladite face polie du substrat d'une couche résistant au polissage.

7. Procédé selon la revendication 6, caractérisé en ce que ladite couche résistant au polissage est une couche de nitrure de silicium.

8. Procédé selon l'une quelconque des revendications 1 à 7, caractérisé en ce que, pour l'opération de polissage, la face non polie (42) dudit substrat est placée sur un support rectifié plan (70), de telle sorte que la face polie constitue une surface plane d'arrêt du polissage.

9. Procédé selon l'une quelconque des revendications 1 à 5, caractérisé en ce qu'après l'attaque anisotrope, le substrat de silicium est utilisé en tant qu'original pour l'obtention, par moulage, de copies dans un matériau plastique.

10. Produit résultant du procédé selon l'une quelconque des revendications 1 à 8, caractérisé en ce qu'il comporte un substrat plan en silicium monocristallin (40) présentant sur l'une de ses faces une pluralité de sillons à profondeur variable (100) et des fibres optiques engagées et fixées dans lesdits sillons et dont une partie du manteau a été entamée de manière à permettre le couplage optique entre lesdites fibres et d'autres éléments optiques.

11. Produit selon la revendication 10, caractérisé en ce que ledit substrat ne présente qu'un seul sillon et une seule fibre optique.

*FIG.1*

*FIG.2*

*FIG.3*

*FIG.4*

00124485

FIG.5

FIG.6

FIG.7